(19) Europäisches Patentamt / European Patent Office / Office européen des brevets

(11) **EP 2 800 055 A1**

(12) **EUROPEAN PATENT APPLICATION**

(43) Date of publication:
05.11.2014 Bulletin 2014/45

(51) Int Cl.:
*G06T 7/00* (2006.01)  *G06T 19/20* (2011.01)

(21) Application number: 13166083.9

(22) Date of filing: 30.04.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **3DDynamics Bvba**
**2970 's Gravenwezel (BE)**

(72) Inventor: **Grauzinis, Aivaras**
**2110 Wijnegem (BE)**

(74) Representative: **IPLodge bvba**
**Technologielaan 9**
**3001 Heverlee (BE)**

(54) **Method and system for generating a 3D model**

(57)    The present invention relates to a method for generating a 3D model from a sequence of 2D depth maps. This method comprises the step generating (110) a partial 3D model from a first 2D depth map of said sequence of 2D depth maps and, for subsequent ones of said sequence of 2D depth maps, the step of enhancing (120) said 2D depth map; and the step of expanding (130) said partial 3D model on the basis of information from said enhanced 2D depth map.

## Figure 1

**Description**

The present invention pertains to the field of 3D modelling, in particular to generating digital 3D models from 2D color and depth maps.

The field of 3D modelling has recently gained increased interest, among others thanks to the advances in 3D printing technology. Cameras with depth sensing capabilities are now available to the general public, in products such as the "KINECT" device from Microsoft Corporation (US) and the 3D sensors from PrimaSense (Israel). To date, no satisfactory way exists to use these devices to generate reliable 3D models from real-life objects in a way that allows 3D reproduction.

Known methods to generate 3D models from 2D depth maps include stitching together individual depth maps acquired from different points of view. These methods are laborious and as the input maps are imperfect, they often lead to an accumulation of modelling errors, as the number of maps used in the process increases.

It is therefore an object of the present invention to provide a method and system for generating a 3D model that does not present the above disadvantages.

According to a first aspect of the present invention, there is provided a method for generating a 3D model from a sequence of 2D depth maps, the method comprising generating a partial 3D model from a first 2D depth map of said sequence of 2D depth maps and, for subsequent ones of said sequence of 2D depth maps: enhancing said 2D depth map; and expanding said partial 3D model on the basis of information from said enhanced 2D depth map.

The sequence of 2D depth maps is preferably composed of 2D depth maps that have a substantial amount of overlap, such as the sequence of 2D depth maps generated by a moving, continuously operating camera. Alternatively, the sequence may constitute streams acquired at unstructured time intervals, but constrained by spatial transformation of continuous or periodic nature. The present invention is based *inter alia* on the insight of the inventors that it is possible to generate a far more accurate 3D model by combining information from such a sequence. Instead of stitching together individual depth maps by using an often small amount of overlap for alignment and scaling purposes only, the present invention relies on registration to recognize the areas of the model under construction for which each newly acquired depth map may provide useful additional information. This information is then used to "paint in" previously unknown areas in the 3D model, and to correct errors or increase the confidence in previously constructed areas of the 3D model.

The 2D depth information may be obtained directly from a camera, or retrieved from storage, for example on a frame-by-frame basis.

In an embodiment of the method according to the present invention, the enhancing comprises removing noise by performing a hierarchical surface normal orientation estimation on said 2D depth map, and smoothening said 2D depth map by removing irregularities in observed surface normals relative to said estimated surface normals.

The raw input from the depth camera or the image storage may not be sufficiently smooth to be used directly in 3D modelling. It is advantageous to remove noise or other artefacts prior to attempting to derive spatial information from the depth map. In this context, a bilateral filter has proven to be an effective means to improve the depth map.

The present embodiment is based *inter alia* on the insight of the inventors that surface normal estimation can be used to smoothen noisy input data. On a smooth surface, local normal vectors ("normals") do not differ much in orientation from one position to the next. Hence, the occurrence of large variations in the orientation of neighboring normal vectors is indicative of the presence of an edge feature or noise. This effect can be exploited to remove noise and/or to sharpen actual edge features.

However, known smoothening techniques are either too coarse to provide useful results, or too computationally intensive to be used in a real-time process. Specific embodiments of the invention are further based on the insight of the inventors that a hierarchical approach that uses different smoothening techniques at different levels of detail yields superior results while remaining within the time budget of a real-time process.

Accordingly, improved depth map pre-processing may be provided by using hierarchical surface normal orientation estimation to improve low quality, incomplete and/or noisy depth map registration. To achieve this goal, the input depth map is recomputed in a hierarchical pyramid, wherein at the lowest level surface normal orientation is estimated using Sobel interpretation, and wherein higher levels are refined by fitting planes by weighting neighbor normals and applying a fast bilateral filter to preserve sharp features and remove outliers.

Applying a combination of Sobel interpolation at the low pyramid levels and more advanced methods such as plane fitting with bilateral filtering at higher levels provides an optimal balance between output quality and computational efficiency.

In an embodiment of the method according to the present invention, the expanding comprises: aligning the enhanced 2D depth map with the partial 3D model; and updating surfels of the partial 3D model on the basis of the aligned 2D depth map.

In a particular embodiment, the method is carried out by a first processor and a second processor, the second processor being adapted to efficiently perform matrix arithmetic on 4-byte data elements, wherein the first processor is used to obtain the depth map, to convert 3-byte data elements in the depth map to corresponding 4-byte data elements, and to upload the 4-byte data elements to the second processor, and the second processor is used to render a model depth map of the partial 3D model from a current view represented by the uploaded depth map, to perform hierarchical registration, and to validate the registration.

The first processor is preferably a CPU, and the second processor is preferably a GPU.

A GPU (graphics processing unit) is a microprocessor with an instruction set tailored to tasks generally associated with rendering computer graphics, including multiplication of vectors (in particular 4-vectors) and matrices (in particular 4x4 matrices). A GPU will in typically accelerate the rendering of texturized polygons by taking over the necessary computations from the CPU. At present, it is common practice to equip general purpose computers with a GPU, the properties of which are dependent on the intended use of the computer.

This embodiment is based *inter alia* on the insight of the inventors that the computational capabilities of high-end GPUs render them particularly suitable for carrying out certain parts of a 3D modelling process. Using a hybrid CPU/GPU pipeline shortens the iteration time and offloads GPU. By judiciously dividing the computations required for the intended 3D modelling between the CPU and the GPU, real-time updating of the 3D model on the basis of the depth information being captured becomes possible.

In an embodiment, the method according to the present invention further comprises acquiring the sequence of 2D depth maps in real-time from a depth camera adapted to provide depth information.

The term "depth camera" will be used hereinafter to designate a camera capable of providing a 2D depth map, regardless of the technology used for this purpose; such technologies may include stereoscopic imaging, time-of-flight sensing, use of a multi-camera setup, or other methods known to the skilled person. The depth camera also provides regular video images, i.e. 2D color maps or grayscale maps for the consecutive frames in the captured video stream. The video information may also be used in the various steps of the method according to the present invention, in addition to the actual 2D depth maps.

This embodiment has the advantage of allowing the camera operator to gradually improve the quality of the 3D model while it is being generated. The real-time character of this embodiment provides the further advantage that it provides an up-to-date 3D model at the moment the capturing is finished. Real-time capturing and modelling also allows for visual feedback concerning the quality of the model, such that the depth camera operator may focus further capturing efforts on areas of the model that require additional detail or confidence. Visual feedback about the partial 3D model is preferably provided alongside the view as presently being captured by said camera.

In an embodiment of the method according to the present invention, the registration comprises using positioning information associated with the depth camera.

The term positioning information as used herein is intended to include motion information such as acceleration information, attitude information, as well as actual (absolute) position information. The use of such information has the advantage of speeding up the registration process and/or rendering it more reliable.

According to an aspect of the present invention, there is provided a computer program product, comprising code means configured to make a computer perform, when executed, the method as described above.

In an embodiment of the computer program product according to the present invention, the code means comprise a first code portion adapted to be executed by a CPU and a second code portion adapted to be executed by a GPU.

The advantages of embodiments of the computer program product according to the present invention correspond, *mutatis mutandis,* to those of the corresponding embodiments of the method according to the present invention.

According to an aspect of the present invention, there is provided a system for generating a 3D model from a sequence of 2D color and depth maps, the system comprising: a depth camera adapted to provide depth information; a first processor arranged to receive the depth information from the depth camera; and a second processor, operatively connected to the first processor; the system being configured to carry out the method according to the present invention.

In an embodiment of the system according to the present invention, the first processing means is a CPU of a general-purpose computer, and the second processing means is a GPU installed in said general-purpose computer.

In an embodiment, the system according to the present invention further comprises display means configured to provide visual feedback of said partial 3D model alongside the view as presently being captured by said depth camera.

The advantages of the above embodiments of the system according to the present invention correspond, *mutatis mutandis,* to those of the corresponding embodiments of the method according to the present invention.

In a particular embodiment, the system further comprises a mobile device configured to communicate with the first processing means over a wireless network, wherein the mobile device comprises a video camera configured to capture video images of substantially the same scenery as the depth camera and positioning means configured to capture positioning information, wherein the mobile device is configured to transmit the video images and the positioning information to the first processing means over the wireless network, and wherein the system is further configured to use the video images in the enhancing and to use the positioning information in the registration.

At present, mobile devices such as smart phones and tablet computers are typically equipped with a video camera, sensors for capturing positioning information, and wireless networking capabilities (i.e. wireless LAN capabilities in addition to the standard mobile communication capabilities). This embodiment is based *inter alia* on the insight of the inventors that this combination of features renders the mobile device particularly suitable as an element in the system according to the present invention. Preferably, the display of the mobile device is used as the display means of the system, such that the mobile device becomes the main agent of user interaction towards the operator of the depth camera. The depth camera and the mobile device are preferably mechanically coupled to each other to facilitate handling.

According to an aspect of the present invention, there is provided a depth camera for use in the system according to the present invention, the depth camera comprising attachment means adapted to removably attach the mobile device in a such a manner that a video camera of the mobile device, when attached to the attachment means, may capture video images of substantially the same scenery as the depth camera.

According to an aspect of the present invention, there is provided a kit comprising a computer program product and a depth camera according to the present invention.

These and other technical effects and advantages of embodiments of the present invention will now be described with reference to the enclosed drawings, in which:

- Figure 1 presents a flow chart of a method according to an embodiment of the present invention;
- Figure 2 presents a detailed flow chart of certain steps in a method according to a more specific embodiment of the present invention; and
- Figure 3 schematically illustrates a system according to an embodiment of the present invention.

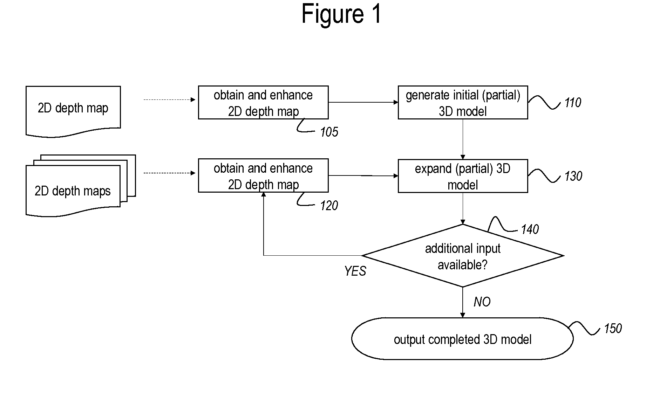

Figure 1 presents a flow chart of a method according to an embodiment of the present invention, for generating a 3D model from a sequence of 2D depth maps. The 2D depth maps of the sequence have a substantial amount of overlap, such as may be expected from a sequence of 2D depth maps generated by a slowly moving, continuously operating camera. During the capturing of the sequence, the camera may also undergo tilting, panning, and zooming transitions. The depth maps provided to the method of the invention may be provided in real-time as they are being captured, or retrieved from a storage means.

The 3D model is built up gradually from information obtained from consecutive depth maps. An initial partial 3D model is derived **110** from a first depth map (frame) that is obtained from the camera or storage means and optionally enhanced **105**. This 3D model is then iteratively expanded **130** on the basis of subsequent depth maps, which are also enhanced **120** as necessary.

The 3D model used in embodiments of the present invention may be built up out of surfels. Each surfel may contain a 3D position, the normal of the local surface, the color of the local surface, and a tangent disk radius. The radius is related to the resolution at which the surfel was captured. When scanned from a large distance, the real-world distance between surfels (back-projected pixels) is large and their respective disk radius is large. Beside this basic information, several statistics are kept for each surfel. The number of times a surfel is observed quantifies how certain a surfel is. The timestamp of the last time the surfel was seen is, is also kept. The incidence angles at which a surfel was observed are also stored in a highly quantized map. Surfels that have been observed from a large range of incidence angles are considered very reliable.

With respect to the 2D depth maps, the term "enhancing" is used to denote any preprocessing that is performed to render them more suitable for 3D modelling purposes. This may include removing noise and/or enhancing edges (for instance by means of bilateral filter, or, more preferably, by means of a hierarchical normal estimation process as described above), rolling shutter distortion correction, etc. At the same stage, other preprocessing steps may be carried out on the data, such as converting the data structure of depth maps and RGB images to accommodate the GPU-specific pipeline as well as feature detection, storage and conversion for further pipelines steps.

The term "expanding" is used to denote both the spatial extension of the model towards regions that were not previously modelled, as the improvement of regions that had been modeled by correcting errors, filling gaps, or increasing confidence.

The method may continue to expand the 3D model as long as additional information (in the form of further 2D depth maps) can be obtained. This is schematically illustrated by the completion test **140.** Once all the available input has been processed, a completed 3D model may be output **150.**

A specific embodiment of the expanding step **130** will now be described in more detail. At each iteration, i.e. for each obtained 2D depth map, the method cycles through the sub-steps of registration and integration. In addition, as the increments between consecutive frames may occasionally be too large for the normal registration procedure to succeed (e.g., in the event of interruptions in the image acquisition process), a recovery process based on reference frames may be provided.

**Registration** consists of aligning the new depth map to already collected and aligned data. It preferably makes efficient use of the CPU/GPU architecture as described in more detail below, sensor fusion, and efficient and robust pipeline using filtering, hierarchical processing, projective mapping and statistic correspondence analysis, weighting and minimization. The registration is then verified by a multi-step procedure, where shape, shape normals, color, and sensor fusion data are used to compute the alignment error and confirm, discard, or weight the current alignment accordingly.

Data fusion is performed to paint in, add, or complete arbitrary 3D model using matching, recovery and verification procedures to estimate initial pose relationship between model and current view, and the integration procedure is employed to create new surfels and register them to the model, filling in holes and refining model if surfel verification does not conflict with it.

**Integration** consists of updating surfels of the 3D model under construction on the basis of the aligned 2D depth map. The additional information may pertain to surfels already present in the 3D model, or it may necessitate the creation of new surfels. Preferably, the following steps are taken:

- Update the surfels with corresponding vertex info (position, normal, number of times observed, timestamp when last observed, incidence angles from which observed, surfel disk radius, color):

  ○ Iterate through all surfels, project them back onto the camera, and pick the closest one as the one to update;
  ○ Update the confidence of all other visible surfels.

- Create new surfels for data points that were not used during the update phase.
- Create new surfels based on surfel radius - closer proximity to the object creates higher density smaller disk radius surfels - replacing surfels with large disk radius and increasing local definition.
- Remove surfels with low confidences that have not been observed for a predefined amount of time.
- Update the topology node network, creating new nodes if required, and creating and/or updating links between surfels and their respective topology nodes.

The topology node network is a net of topology nodes spanning the surfel cloud, built alongside the surfel cloud. All surfels are connected to at least a single topology node, and when the topology node network is deformed in a non-rigid manner, the corresponding surfels transform along. Non-rigid deformation is prompted a large overlap is noticed between two sheets of (seperately rendered) topology subgraphs. After non-rigid registration, recovery is required for continuation of the scanning process.

**Recovery** is preferably made possible by means of reference frames. Creation of a reference frame is attempted every nth frame, if the candidate frame represents a sufficiently different position from any other stored frames (or as soon the frames become too different). These frames contain a color map, a depth map, color features (e.g., the ORB descriptor), and geometry features (e.g., based on SPIN images). The features are preferably stored in a hashed LSH database for quick access and fast matching features in a large database. In case of a recovery attempt, sparse registration is performed against all reference candidates. This may be done on the basis of a statistical RANSAC approach, followed by classical Horn-Hilden minimization. The best match is chosen, and from that point on, the process returns to dense registration, as described above, and the cycle continues. If no good reference frame was found, the entire model is used to create 3D geometry features, and registration is attempted again.

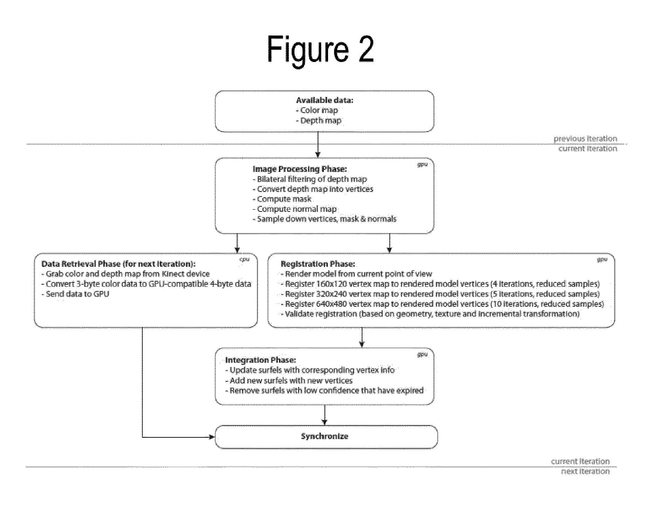

In a particular embodiment, schematically illustrated in Figure 2, the method of the present invention is carried out by a CPU and a GPU, the GPU being suited to efficiently perform matrix arithmetic on 4-byte data elements. In each iteration, the CPU is used to obtain the depth map, to convert 3-byte data elements in said depth map to corresponding 4-byte data elements, and to upload the 4-byte data elements to the GPU. The GPU is used to render a model depth map of said partial 3D model from a current view represented by the uploaded depth map, to perform hierarchical registration, and to validate the registration.

Under the division of work illustrated in Figure 2, the overall work flow for each iteration could be as follows.

**Image Processing Phase (CPU)**

- Bilateral filtering of depth map.
- Converting the depth map into vertices.
- Computing the mask.

  ○ In matrix form, where each position corresponds to a coordinate in the image.
  ○ In vectorized form, with several vectorization algorithms, based on block sampling, smart recursive sampling, and normal based sampling.

- Computing the normals.

  ○ Depending on the levels, several normal computation algorithms may be used, ranging from basic Sobel interpretations, to more complicated computations found in the literature.

- Computing a vertex pyramid, sampling down the captured vertices for several levels, and computing the masks and normals for each level.

**Data Retrieval Phase (CPU)**

- Grab color/depth map from camera sensor.
- Convert the 3-channel RGB data to 4-channel RGBA data for the GPU.
- Upload data to GPU.

**Registration Phase (GPU)**

- Render model from current point of view (including vertices, depths, normals, colors), using one of four methods:

  ○ Standard OpenGL based rendering of the vertex map.
  ○ OpenCL based rendering, rendering using only the closest point to the camera, within a range of the ray.
  ○ OpenCL based rendering, grouping the closest points to the camera, within a range of the ray.
  ○ OpenCL based rendering, using a separate rendering for each group of vertices
  that were previously seen together in a single view.
  For each of these methods, the resulting depth/vertex map is post-processed, using a second bilateral filter to increase robustness and accuracy of registration.

- For each level in the sampled down vertex pyramid, iteratively register the increasingly more detailed new data to the data of the rendered model, as follows:

  i. Perform a data association step, in which point correspondences are found using fast, GPU optimized projective mapping. Magnetometer, accelerometer, gyro data is used to estimate initial pose.
  ii. Perform minimization of gradient difference between current texture and rendered model texture
  iii. Compute statistics on how well the currently registered view corresponds to the rendered model, using the point matches from step (i).
  iv. Assign weights to the correspondences found in (i) and (ii), based on a mix of values such as surfel time of birth, confidence values, incidence angles, normals and surfel size
  v. Combine the correspondences from (i) and the weights and robust estimator from (iv) to form a linear system of equations, based on a weighted version of the point-to-plane minimization under a minimal increment assumption:

$$\sum_i \begin{pmatrix} c_{i,x}c_{i,x} & c_{i,x}c_{i,y} & c_{i,x}c_{i,z} & c_{i,x}n_{i,x} & c_{i,x}n_{i,y} & c_{i,x}n_{i,z} \\ c_{i,y}c_{i,x} & c_{i,y}c_{i,y} & c_{i,y}c_{i,z} & c_{i,y}n_{i,x} & c_{i,y}n_{i,y} & c_{i,y}n_{i,z} \\ c_{i,z}c_{i,x} & c_{i,z}c_{i,y} & c_{i,z}c_{i,z} & c_{i,z}n_{i,x} & c_{i,z}n_{i,y} & c_{i,z}n_{i,z} \\ n_{i,x}c_{i,x} & n_{i,x}c_{i,y} & n_{i,x}c_{i,z} & n_{i,x}n_{i,x} & n_{i,x}n_{i,y} & n_{i,x}n_{i,z} \\ n_{i,y}c_{i,x} & n_{i,y}c_{i,y} & n_{i,y}c_{i,z} & n_{i,y}n_{i,x} & n_{i,y}n_{i,y} & n_{i,y}n_{i,z} \\ n_{i,z}c_{i,x} & n_{i,z}c_{i,y} & n_{i,z}c_{i,z} & n_{i,z}n_{i,x} & n_{i,z}n_{i,y} & n_{i,z}n_{i,z} \end{pmatrix} \begin{pmatrix} \alpha \\ \beta \\ \gamma \\ t_x \\ t_y \\ t_z \end{pmatrix} = -\sum_i \begin{pmatrix} c_{i,x}(p_i - q_i) \cdot n_i \\ c_{i,y}(p_i - q_i) \cdot n_i \\ c_{i,z}(p_i - q_i) \cdot n_i \\ n_{i,x}(p_i - q_i) \cdot n_i \\ n_{i,y}(p_i - q_i) \cdot n_i \\ n_{i,z}(p_i - q_i) \cdot n_i \end{pmatrix}$$

where $p_i$ and $q_i$ are corresponding points, with normal $n_i$, and $c_i = p_i \times n_i$. The vectors $r = [\alpha, \beta, \gamma]^T$ and $t$ define the rotation and translation to be minimized. This is a linear matrix equation of the form $Cx = b$, where $C$ is the $6 \times 6$ covariance matrix accumulated from the $c_i$ and $n_i$, $x$ is a $6 \times 1$ vector of unknowns, and $b$ is a $6 \times 1$ vector that also depends on the data points. The equation may be solved using standard methods, yielding the optimal incremental rotation and translation.

- For increased performance, vectorized masks and a limited number of correspondences based on GPU workgroup size are employed. This effectively constitutes a smart sampling method.

**Registration Verification**

- Movement: assuming movement is minimal, large rotations or translations are a sign of registration errors.
- Geometry: based on a comparison of overlapping depth maps, checking the number of free space and/or occupied space violations.
- Texture: highly textured areas are used for verification against registration slippage by minimizing difference of registered frame texture gradient and render model gradient.
- Statistics: using the statistics gathered during the iterations of the registration phase, it is established if the registration was converging to a minimum, or oscillating.
- Sensor Fusion: minimization between sensor pose, Kalman filter estimated pose and registered pose to eliminate.

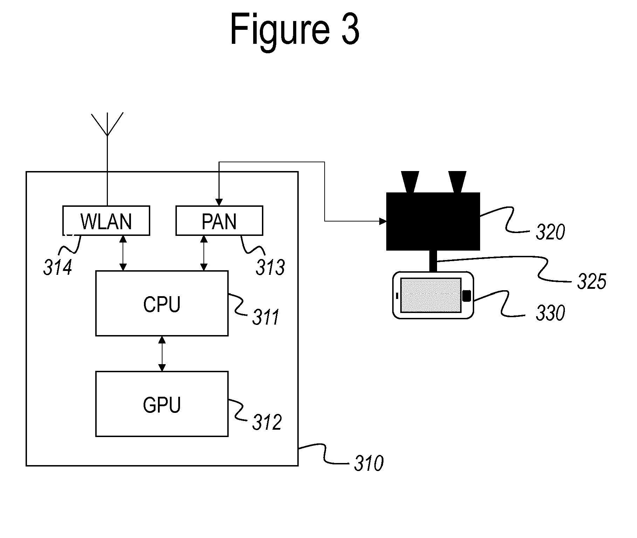

Figure 3 schematically illustrates an exemplary system according to an embodiment of the present invention. The illustrated system comprises a depth camera **320** adapted to provide depth information in the form of 2D depth maps (in addition to the regular video information, in the form of 2D color maps); a first processor **311** arranged to receive that depth information from the depth camera **320;** and a second processor **312,** operatively connected to the first processor **311.** The system is configured to carry out the method as described above, making use of the described workload distribution between the two processors. Without loss of generality, the illustrated system comprises a general-purpose computer **310,** of which the CPU takes on the role of the first processor **311** and the GPU takes on the role of the second processor **312.**

The depth camera **320** is capable of providing depth maps in addition to regular video, typically at a conventional resolution such as VGA resolution (640 × 480 pixels). The frame rate may be 25 Hz or 30 Hz. The skilled person will appreciate that other resolutions or frame rates that are conventional in computer graphics may also be used. In specific applications, it may be desirable to use a depth camera that produces other, less conventional resolutions or frame rates.

The computer **310** is equipped with the necessary networking interfaces to allow the CPU **311** to communicate with the peripheral equipment. The term "interface" is intended to cover the necessary hardware and software to allow communication in accordance with the relevant protocols, across the various layers of the protocol stack.

In the illustrated case, a wireless interface **314** provides wireless data communication capabilities. The wireless interface **314** may operate according to widespread standards such as IEEE 802.11a/b/g/n. Alternatively, a wireless PAN standard such as Bluetooth could be used. As a further alternative, a mobile communication standard could be used.

In the illustrated case, a wired PAN interface **313** provides high-speed wired data communication capabilities. The PAN interface **313** may operate according to a widespread standard such as USB. A LAN interface may be provided as an alternative to the PAN interface; point-to-point LAN types would be particularly suitable, such as those according to the IEEE 802.3 "Ethernet" standard.

The PAN or LAN interface is intended for communication between the CPU **311** and the depth camera **320,** in particular to allow the depth camera **320** to transmit color and depth maps to the CPU **311.** The PAN or LAN interface may additionally be used to power the depth camera **320.**

The wireless interface **314** is intended for communication between the CPU **311** and a mobile device **331.** The mobile device **331** has a display **331** and a corresponding wireless interface, and is configured to provide visual feedback of the partial 3D model alongside the view as presently being captured by the depth camera **320.** In order to provide this visual feedback, it must receive the necessary information from the CPU **311** via the wireless network. Using the display of the mobile device **331** as the main display means of the system optimizes user interaction and eliminates erroneous motion caused by the user diverting his gaze away from the target area to an external control screen.

The mobile device **330** preferably comprises a video camera configured to capture video images of substantially the same scenery as the depth camera **320.** As a further preference, it comprises positioning means configured to capture positioning information, such as an accelerometer, a gyroscope and/or a magnetometer. The mobile device **330** is preferably configured to transmit the video images and/or positioning information to the CPU **311** over the wireless network. The system can then use the video images in the enhancing step and use the positioning information in the registration step. When available, the positioning information, and in particular the motion information contained therein, may be used along with feature extraction information to inform a rolling shutter correction applied during the preprocessing of the 2D depth maps.

The use of the mobile device **330** in the architecture described above provides other possible benefits. Images can be streamed from the mobile device and used as texture for the computed model. The acquired images are typically of much higher resolution than those from the RGBD sensor. Besides a geometric calibration, a temporal calibration needs to be performed to extract the delay between their content streams. This can be done by moving the scanner in a certain pattern for a short amount of time while scanning a simple scene. In order to provide better textures, motion sensors on the mobile device or a lack of change in the texture/depth data from the RGBD-sensor can be used to detect an interruption in the motion of the camera, which may cue the mobile device to take a picture, optionally using the flash on the device. The picture can be used to present an augmented reality view (3D model information overlaid on the visual picture), which will help to visually show which parts of the scenery do not yet have a high-resolution texture applied to them.

The depth camera **320** preferably comprises attachment means **325** adapted to removably attach the mobile device **330** in such a manner that the video camera of the mobile device **330,** when attached to the attachment means, may capture video images of substantially the same scenery as the depth camera **320.** (For clarity purposes, the attachment means **325** is only shown as a bar in Figure 3, and the alignment of the respective points of view of the mobile device camera and the depth camera is not represented in the drawing.)

Optionally, a second attachment means may be provided to removably attach a holding grip or a tripod. A tripod may be provided, which, in its folded position, can be used as a holding grip. As the illustrated embodiment makes optimal use of existing and commonly available elements such as a general-purpose computer with a GPU and a mobile device such as a smart phone, it can easily be implemented by an end user who is provided with a kit comprising a computer program product that embodies the method of the present invention and a depth camera **320,** preferably one with attachment means **325** for the mobile device **330.**

The system of the present invention may advantageously be used to perform data fusion in order to improve a 3D model obtained using one sole (stationary) scanner, in the following exemplary way. The 3D model obtained from the first scanner, which typically includes one or more occlusions, is first loaded. The user can specify the rough position and angle from which the hand-held scanner is starting. Alternatively, a set of key frames can be rendered from the 3D model. A method similar to the recovery method described above can now be used to automatically detect the position of the handheld scanner by matching the current view with the key frames. The result can again be shown by superimposing the current scanned frame onto the 3D model. After registration, 3D scanned data, detected near or on the current model is not used. However, surfels that fill current holes in the models are included into the model, to complete the latter.

Embodiments of the present invention provide new and improved depth map pre-processing using hierarchical surface normal orientation estimation to improve low quality, incomplete and/or noisy depth map registration in a GPU-accelerated pipeline. To achieve this goal, the input depth map is recomputed in hierarchical pyramid, where lowest level surface normals orientation is estimated using Sobel interpretations, higher levels are refined by fitting planes, by weighting neighbor normals and applying a fast bilateral filter to preserve sharp features and remove outliers. This method allows to reduce registration errors by providing better surface normals without compromising real time GPU performance.

Embodiments of the present invention comprise using sensor fusion to estimate the next pose for registration, minimize necessary transformations and validate registration of the current frame to the model. Sensors from mobile or dedicated sensor devices containing magnetometer, accelerometer and gyroscope are combined to speed up initial pose estimation, offload the GPU from unnecessary computations and provide an independent registration verification mechanism that helps to rule out ambiguous registrations and minimizes registration errors in the presence of noise, extreme motion and motion blur. Embodiments of the present invention comprise a verification procedure using combined geometric, color, gradient minimization and sensor fusion components to confirm/discard/re-weight registration in real time.

Throughout the application, reference has been made to "processors". The skilled person will appreciate that the functions attributed to these processors may be carried out by different types of hardware devices with varying degrees of specialization and flexibility, such as ASICs, FPGAs, and the like.

The skilled person will appreciate that features that have been described herein with respect to specific method, computer program, or system embodiments only, may be applied to other embodiments of the same or other categories with the same effects and advantages, and such combinations are hereby explicitly included.

Although the invention has been described hereinabove with reference to specific embodiments, this was done to illustrate and not to limit the invention, the scope of which is to be determined by the enclosed claims.

**Claims**

1. A method for generating a 3D model from a sequence of 2D depth maps, the method comprising generating (110) a partial 3D model from a first 2D depth map of said sequence of 2D depth maps and, for subsequent ones of said sequence of 2D depth maps:

    - enhancing (120) said 2D depth map; and
    - expanding (130) said partial 3D model on the basis of information from said enhanced 2D depth map.

2. The method according to claim 1, wherein said enhancing comprises performing a hierarchical surface normal orientation estimation on said 2D depth map, and smoothening said 2D depth map by removing irregularities in observed surface normal relative to said estimated surface normals.

3. The method according to any of the preceding claims, wherein said expanding comprises:

   - aligning said enhanced 2D depth map with said partial 3D model; and
   - updating surfels of said partial 3D model on the basis of said aligned 2D depth map.

4. The method according to claim 3, the method being carried out by a first processor and a second processor, said second processor being adapted to efficiently perform matrix arithmetic on 4-byte data elements, wherein said first processor is used to obtain said depth map, to convert 3-byte data elements in said depth map to corresponding 4-byte data elements, and to upload said 4-byte data elements to said second processor, and said second processor is used to render a model depth map of said partial 3D model from a current view represented by said uploaded depth map, to perform hierarchical registration, and to validate said registration.

5. The method according to any of the preceding claims, further comprising acquiring said sequence of 2D depth maps in real-time from a depth camera adapted to provide depth information.

6. The method according to claim 5, wherein said registration comprises using positioning information associated with said depth camera.

7. A computer program product, comprising code means configured to make a computer perform, when executed, the method of any of the preceding claims.

8. The computer program product according to claim 7 as referring to claim 4, wherein said code means comprise a first code portion adapted to be executed by a CPU operating as said first processor and a second code portion adapted to be executed by a GPU operating as said second processor.

9. A system for generating a 3D model from a sequence of 2D color and depth maps, the system comprising:

   - a depth camera (320) adapted to provide depth information;
   - a first processor (311) arranged to receive said depth information from said depth camera (320); and
   - a second processor (312), operatively connected to said first processor (311);

   said system being configured to carry out the method of claim 5 as dependent on claim 4.

10. The system according to claim 9, wherein said first processing means (311) is a CPU of a general-purpose computer (310), and wherein said second processing means (312) is a GPU installed in said general-purpose computer (310).

11. The system according to claim 9 or claim 10, further comprising display means (331) configured to provide visual feedback of said partial 3D model alongside the view as presently being captured by said depth camera (320).

12. The system according to claim 11, further comprising a mobile device (330) configured to communicate with said first processing means (311) over a wireless network (314), wherein said mobile device (330) comprises a video camera configured to capture video images of substantially the same scenery as said depth camera (320) and positioning means configured to capture positioning information, wherein said mobile device (330) is configured to transmit said video images and said positioning information to said first processing means over said wireless network (314), and wherein said system is further configured to use said video images in said enhancing and to use said positioning information in said registration.

13. A depth camera (320) for use in the system of claim 12, said depth camera (320) comprising attachment means (325) adapted to removably attach said mobile device (330) in a such a manner that a video camera of said mobile device (330), when attached to said attachment means, may capture video images of substantially the same scenery as said depth camera (320).

14. A kit comprising a computer program product according to claim 7 or 8 and a depth camera (320) according to claim 13.

# Figure 1

```
┌──────────────┐         ┌──────────────────┐      ┌──────────────────────┐
│              │         │ obtain and enhance│      │ generate initial      │ ⌇ 110
│ 2D depth map │ ┄┄┄┄┄▸ │   2D depth map    │ ───▸ │ (partial) 3D model    │
│              │         └──────────────────┘      └──────────────────────┘
└──────────────┘               └ 105

┌──────────────┐         ┌──────────────────┐      ┌──────────────────────┐
│ 2D depth maps│ ┄┄┄┄┄▸ │ obtain and enhance│ ───▸ │ expand (partial) 3D   │ ⌇ 130
│              │         │   2D depth map    │      │ model                 │
└──────────────┘         └──────────────────┘      └──────────────────────┘
                               └ 120                          │
                                                              ▼
                                                     ◇ additional input   ⌇ 140
                                          YES        ◇   available?
                                                              │ NO
                                                              ▼
                                              ( output completed 3D model ) ⌇ 150
```

# Figure 2

**Available data:**
- Color map
- Depth map

previous iteration
current iteration

**Image Processing Phase:** *gpu*
- Bilateral filtering of depth map
- Convert depth map into vertices
- Compute mask
- Compute normal map
- Sample down vertices, mask & normals

**Data Retrieval Phase (for next iteration):** *cpu*
- Grab color and depth map from Kinect device
- Convert 3-byte color data to GPU-compatible 4-byte data
- Send data to GPU

**Registration Phase:** *gpu*
- Render model from current point of view
- Register 160x120 vertex map to rendered model vertices (4 iterations, reduced samples)
- Register 320x240 vertex map to rendered model vertices (5 iterations, reduced samples)
- Register 640x480 vertex map to rendered model vertices (10 iterations, reduced samples)
- Validate registration (based on geometry, texture and incremental transformation)

**Integration Phase:** *gpu*
- Update surfels with corresponding vertex info
- Add new surfels with new vertices
- Remove surfels with low confidence that have expired

**Synchronize**

current iteration
next iteration

11

# Figure 3

WLAN

314

PAN

313

CPU

311

GPU

312

310

320

325

330

Europäisches
Patentamt

European
Patent Office

Office européen
des brevets

# EUROPEAN SEARCH REPORT

Application Number

EP 13 16 6083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RICHARD A NEWCOMBE ET AL: "KinectFusion: Real-time dense surface mapping and tracking", MIXED AND AUGMENTED REALITY (ISMAR), 2011 10TH IEEE INTERNATIONAL SYMPOSIUM ON, IEEE, 26 October 2011 (2011-10-26), pages 127-136, XP032201443, DOI: 10.1109/ISMAR.2011.6092378 ISBN: 978-1-4577-2183-0 * page 128, left-hand column, line 6 - right-hand column, line 4 * * Section 2.4 "Dense Scene Representation"; page 129, left-hand column, line 12 - right-hand column, line 8 * * Section 2.5 "Dense SLAM with Active depth Sensing"; page 129, right-hand column, line 1 - line 39 * * Section 3 "Method"; page 129, right-hand column, line 1 - page 130, left-hand column, line 15 * * Section 3.2 "Surface Measurement"; page 130, left-hand column, line 1 - right-hand column, last line * * Section 3.3 "Mapping as Surface Reconstruction"; page 130, right-hand column, line 1 - line 18 * * Section 3.4 "Surface Prediction from ray Casting the TSDF"; page 131, right-hand column, line 1 - line 11 * * Section 3.5 "Sensor Pose Estimation"; page 132, right-hand column, line 1 - line 24 * * Section 3.5 "Sensor Pose Estimation"; page 133, left-hand column, line 40 - -/-- | 1-14 | INV. G06T7/00 G06T19/20 |
| | | | TECHNICAL FIELDS SEARCHED (IPC) |
| | | | G06T |

The present search report has been drawn up for all claims

| Place of search | Date of completion of the search | Examiner |
|---|---|---|
| Berlin | 24 September 2013 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 13 16 6083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | right-hand column, line 19 *<br>* page 134, right-hand column, line 3 - last line *<br>* Section 5 "Geometry aware AR";<br>page 135, left-hand column, line 1 - right-hand column, last line *<br>* page 136, left-hand column, line 3 - line 7 *<br>* figures 1,3,7,8,11,14 *<br>----- | | |
| X | SHAHRAM IZADI ET AL: "KinectFusion", USER INTERFACE SOFTWARE AND TECHNOLOGY, ACM, 2 PENN PLAZA, SUITE 701 NEW YORK NY 10121-0701 USA,<br>16 October 2011 (2011-10-16), pages 559-568, XP058005302,<br>DOI: 10.1145/2047196.2047270<br>ISBN: 978-1-4503-0716-1<br>* figures 1,2,5,6,11,12,14 *<br>* page 559, right-hand column, line 6 - last line *<br>* page 560, right-hand column, line 3 - line 34 *<br>* page 561, left-hand column, line 3 - right-hand column, line 11 *<br>* page 563, left-hand column, line 3 - right-hand column, line 37 *<br>* Section "Volume Integration";<br>page 564, right-hand column, line 1 - page 565, right-hand column, line 5 *<br>----- | 1-14 | |
| | -/-- | | |

TECHNICAL FIELDS
SEARCHED      (IPC)

The present search report has been drawn up for all claims

| Place of search | Date of completion of the search | Examiner |
|---|---|---|
| Berlin | 24 September 2013 | Gauthier, J |

EPO FORM 1503 03.82 (P04C01)

Europäisches
Patentamt

European
Patent Office

Office européen
des brevets

**EUROPEAN SEARCH REPORT**

Application Number

EP 13 16 6083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIANHAO DU ET AL: "Improving 3D indoor mapping with motion data", ROBOTICS AND BIOMIMETICS (ROBIO), 2012 IEEE INTERNATIONAL CONFERENCE ON, IEEE, 11 December 2012 (2012-12-11), pages 489-494, XP032352825, DOI: 10.1109/ROBIO.2012.6491014 ISBN: 978-1-4673-2125-9 * page 489, left-hand column, line 1 - line 28 * * page 489, right-hand column, line 4 - line 18 * * page 490, left-hand column, line 10 - line 39 * * Section III. Description of the Approach; page 490, left-hand column, line 1 - right-hand column, line 17 * * figures 1,2,3,4 * | 1-14 | |

-----

-/--

TECHNICAL FIELDS
SEARCHED      (IPC)

The present search report has been drawn up for all claims

| Place of search | Date of completion of the search | Examiner |
|---|---|---|
| Berlin | 24 September 2013 | Gauthier, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 13 16 6083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Peter Henry ET AL: "RGB-D mapping: Using depth cameras for dense 3D modeling of indoor environments", 12th International Symposium on Experimental Robotics, 18 December 2010 (2010-12-18), XP055055175, Retrieved from the Internet: URL:http://www2.seattle.intel-research.net /˜xren/publication/3d-mapping-iser-10-fina l.pdf [retrieved on 2013-03-04] * page 2, line 1 - page 3, line 3 * * page 5, line 1 - line 5 * * Section 3.3 "Surfel representation"; page 8, line 1 - last line * * Section 4.3 "Surfel representation"; page 12, line 1 - last line * * figures 1,2,3 * | 1-14 | |
| A | US 2012/194644 A1 (NEWCOMBE RICHARD [GB] ET AL) 2 August 2012 (2012-08-02) * paragraph [0001] - paragraph [0002]; figures 1,3,9 * * paragraph [0027] - paragraph [0028] * * paragraph [0030] - paragraph [0042] * * paragraph [0046] * * paragraph [0064] - paragraph [0065] * | 1-14 | TECHNICAL FIELDS SEARCHED (IPC) |

-/--

The present search report has been drawn up for all claims

| Place of search | Date of completion of the search | Examiner |
|---|---|---|
| Berlin | 24 September 2013 | Gauthier, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 13 16 6083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHENGYOU ZHANG: "Microsoft Kinect Sensor and Its Effect", IEEE MULTIMEDIA, IEEE SERVICE CENTER, NEW YORK, NY, US, vol. 19, no. 2, 1 February 2012 (2012-02-01), pages 4-10, XP011442655, ISSN: 1070-986X, DOI: 10.1109/MMUL.2012.24 * Setcion "Kinect Sensor"; page 4, right-hand column, line 1 - page 5, left-hand column, line 17 * * page 6, left-hand column, line 6 - right-hand column, line 4 * * figure 1(b) * ----- | 1-14 | |

TECHNICAL FIELDS
SEARCHED     (IPC)

The present search report has been drawn up for all claims

| Place of search | Date of completion of the search | Examiner |
|---|---|---|
| Berlin | 24 September 2013 | Gauthier, J |

EPO FORM 1503 03.82 (P04C01)

## ANNEX TO THE EUROPEAN SEARCH REPORT
## ON EUROPEAN PATENT APPLICATION NO.

EP 13 16 6083

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2013

| Patent document cited in search report | Publication date | Patent family member(s) | | Publication date |
|---|---|---|---|---|
| US 2012194644 A1 | 02-08-2012 | AR | 084952 A1 | 10-07-2013 |
| | | CN | 102609942 A | 25-07-2012 |
| | | TW | 201234278 A | 16-08-2012 |
| | | US | 2012194644 A1 | 02-08-2012 |
| | | WO | 2012106068 A2 | 09-08-2012 |

EPO FORM P0459

For more details about this annex : see Official Journal of the European Patent Office, No. 12/82